# FASCICULE DE BREVET EUROPEEN

(11) **EP 4 295 936 B1**
(45) Date de publication et mention de la délivrance du brevet: **21.01.2026**
(21) Numéro de dépôt: 23174720.5
(22) Date de dépôt: 23.05.2023
(51) Int. Cl.: B01D 35/143

(54) **BLOC DE FILTRATION POUR PISCINE MUNI D'UN SYSTÈME DE MESURE D'UN NIVEAU DE COLMATAGE ET/OU DE DÉTECTION D'UN ÉTAT DE COLMATAGE D'UN FILTRE**
FILTERBLOCK FÜR SCHWIMMBECKEN MIT EINEM SYSTEM ZUR MESSUNG DES VERSTOPFUNGSGRADES UND/ODER ZUR ERKENNUNG EINES VERSTOPFUNGSZUSTANDES EINES FILTERS
SWIMMING POOL FILTER BLOCK PROVIDED WITH A SYSTEM FOR MEASURING A CLOGGING LEVEL AND/OR DETECTING A CLOGGING STATE OF A FILTER

(30) Priorité: 22.06.2022 FR 2206141
(43) Date de publication de la demande: 27.12.2023
(73) Titulaire: Magiflex, 10000 Troyes (FR)
(72) Inventeur: SCHMIT, Edouard, 10260 Saint-Parres-lès-Vaudes (FR); TRUCK, Brice, 10210 Villiers-sous-Praslin (FR)
(74) Mandataire: Marconnet, Sébastien

(56) Documents cités:
- EP-A1- 3 690 168
- CN-A- 113 457 267
- KR-B1- 101 255 235
- US-A- 4 332 679
- US-A1- 2003 132 146
- US-B2- 9 849 412

## Description

L'invention porte sur un bloc de filtration pour piscine muni d'un système de mesure d'un niveau de colmatage et/ou de détection d'un état de colmatage d'un filtre.

On connaît des blocs de filtration comportant une cuve ayant une ouverture débouchant dans un volume d'eau de la piscine et une ouverture d'accès destinée à être située au niveau du sol autour de la piscine. Au moins un filtre est disposé à l'intérieur de la cuve. La cuve comporte du côté de son extrémité basse un premier conduit dans lequel circule un flux d'eau primaire. Ce conduit est relié à une entrée d'une pompe, laquelle présente une sortie connectée à une entrée d'injection d'un multiplicateur de débit, notamment de type Venturi. En outre, au moins un deuxième conduit dans lequel circule un flux d'eau secondaire est relié à une entrée d'aspiration du multiplicateur de débit qui génère un courant d'eau à l'intérieur du bassin de la piscine.

Au fur et à mesure de son utilisation, le filtre du bloc de filtration a tendance à se colmater, c'est-à-dire que des salissures ont tendance à se déposer entre les mailles du filtre de sorte que ce dernier perd sa capacité de filtrage.

Afin de détecter un colmatage du filtre, le document FR2979656 enseigne d'utiliser un pressostat implanté au niveau du multiplicateur de débit. Toutefois, un tel capteur présente un coût de revient élevé et ne permet pas de détecter un écart de pression suffisamment significatif entre un filtre neuf et un filtre colmaté. En effet, la demanderesse a observé que si un tel capteur de pression était efficace pour détecter l'encrassement d'un filtre à sable, il n'était pas possible de l'utiliser pour détecter le colmatage du filtre en matériau tissé, dans la mesure où l'enceinte du bloc de filtration n'est pas correctement fermée et ne permet donc pas d'observer des variations de pression représentatives d'un colmatage de filtre.

Par ailleurs, le document FR3090714 enseigne de mesurer le débit d'eau pour en déduire le niveau de colmatage du filtre. L'écart de débit entre un filtre non colmaté et un filtre colmaté est suffisant pour permettre la détection du colmatage du filtre. Le système de mesure du niveau de colmatage comporte un piquage d'aspiration disposé dans une zone d'aspiration basse du bassin ou dans une zone située autour du bloc du filtration et un piquage de sortie réalisé dans le multiplicateur de débit constituant une zone de refoulement. Toutefois, une telle configuration ne permet pas de détecter efficacement une différence de débit significative pour détecter un colmatage du filtre dans le cas où la sortie du multiplicateur de débit est éloignée de la zone d'aspiration d'eau.

Le document US9849412B2 décrit un procédé de détection du colmatage d'un filtre à fluide. Le procédé consiste à mesurer, à des instants d'échantillonnage successifs, la différence de pression ΔP de l'amont vers l'aval à travers le filtre, à calculer la dérivée première temporelle {ΔP}' de la différence de pression ΔP à différents instants, puis à envoyer un signal de colmatage SC représentatif de la différence de pression ΔP. Le filtre est considéré comme étant colmaté lorsque la dérivée première {ΔP}' est égale à zéro.

L'invention vise à remédier efficacement à cet inconvénient en proposant un bloc de filtration pour piscine défini par le jeu de revendications ci-après.

L'invention permet ainsi, en réalisant le piquage d'aspiration ainsi que le piquage de sortie des conduits du capteur directement dans la paroi de la cuve, de garantir la détection d'un colmatage du filtre quelle que soit la position du multiplicateur de débit.

Selon l'invention, le filtre présentant une forme cylindrique creuse ayant une extrémité haute et une extrémité basse, le piquage d'aspiration est réalisé dans la paroi de la cuve en amont de l'extrémité haute du filtre.

Selon l'invention, le piquage de sortie est réalisé dans la paroi de la cuve entre l'extrémité haute et l'extrémité basse du filtre.

Selon une réalisation de l'invention, ledit bloc de filtration comporte un module de contrôle permettant de déterminer un niveau de colmatage et/ou un état de colmatage du filtre en fonction du débit d'eau mesuré par le capteur.

Selon une réalisation de l'invention, le module de contrôle est apte à déterminer le niveau de colmatage via l'exploitation d'une cartographie établissant une correspondance entre un niveau de colmatage, exprimé par exemple en pourcents, et un débit mesuré par le capteur.

Selon une réalisation de l'invention, le module de contrôle est apte à déterminer un état "non colmaté" ou "colmaté" par comparaison du débit mesuré par le capteur avec un seuil.

Selon une réalisation de l'invention, le module de contrôle comporte des moyens de communication du niveau de colmatage et/ou de l'état de colmatage du filtre à un dispositif de surveillance et/ou un dispositif portable d'un utilisateur.

Selon l'invention, le filtre présente une forme cylindrique creuse.

Selon une réalisation de l'invention, le filtre est de préférence constitué d'une nappe d'un matériau non tissé plissé en accordéon.

Selon une réalisation de l'invention, la pompe comporte un moteur électrique à vitesse variable, multivitesse, ou vitesse fixe.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une vue en perspective avant du bloc de filtration intégrant un système de mesure d'un niveau de colmatage et/ou d'un état de colmatage d'un filtre selon l'invention;
[Fig. 2] La figure 2 est une vue en perspective arrière du bloc de filtration intégrant un système de mesure d'un niveau de colmatage et/ou d'un état de colmatage d'un filtre selon l'invention;
[Fig. 3] La figure 3 montre une vue en coupe longitudinale du bloc de filtration intégrant un système de mesure d'un niveau de colmatage et/ou d'un état de colmatage d'un filtre selon l'invention;
[Fig. 4] La figure 4 montre une vue en perspective d'un piquage d'un conduit du capteur appartenant au système de mesure d'un niveau de colmatage et/ou d'un état de colmatage d'un filtre selon l'invention.

Les éléments identiques, similaires ou analogues conservent la même référence d'une figure à l'autre.

Par ailleurs, les termes d'orientation de type "supérieur" ou "inférieur" sont entendus par référence à un bloc de filtration en état de fonctionnement autour d'une piscine.

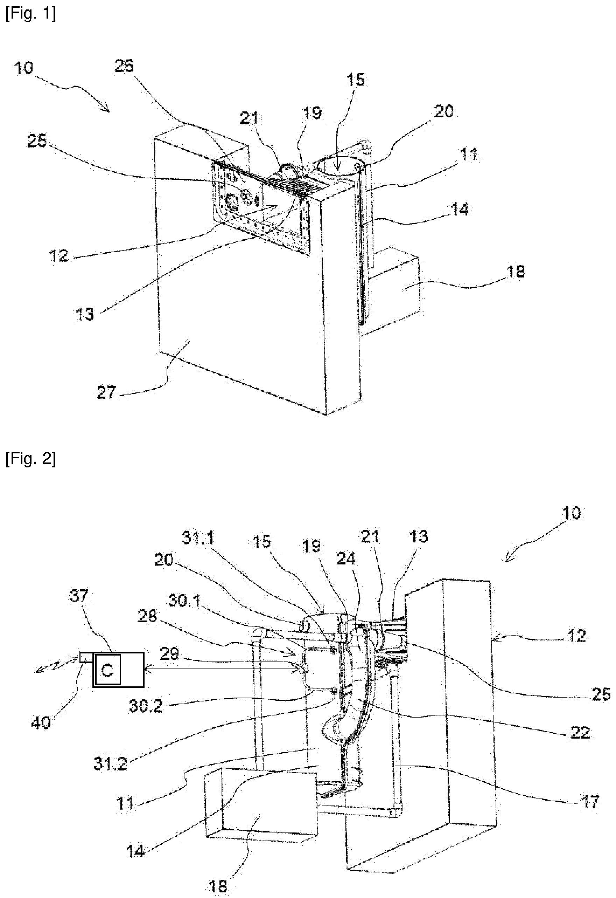

Les figures 1 et 2 montrent un bloc de filtration 10 pour piscine comportant une cuve 11 ayant une paroi 14, notamment de forme cylindrique, délimitant un espace interne. La paroi 14 de la cuve vient de matière avec un conduit récupérateur 13, de préférence de forme évasée, ayant une ouverture 12 débouchant dans un volume du bassin de piscine. La paroi 14 de la cuve 11 présente du côté de son extrémité haute une ouverture d'accès 15 destinée à être située au niveau du sol autour de la piscine. L'ouverture d'accès 15 est destinée à être obturée par une trappe amovible (non représentée).

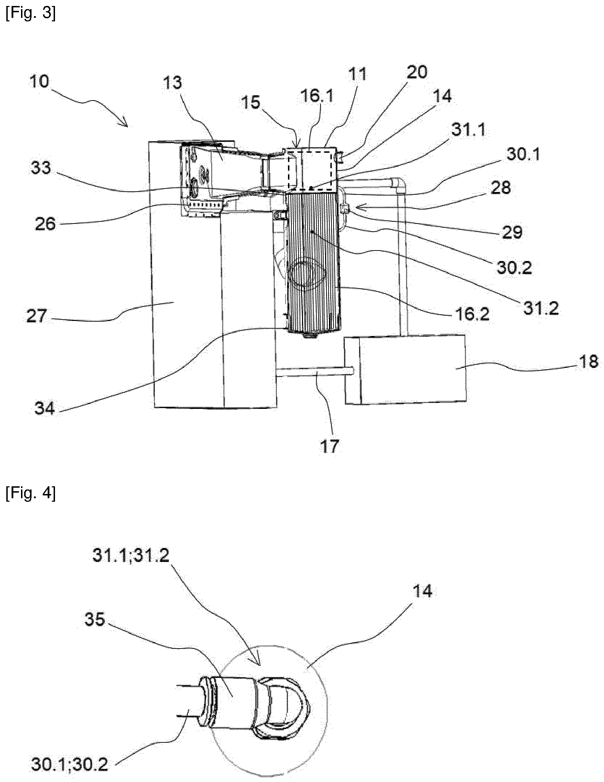

Au moins un filtre est disposé à l'intérieur de l'espace interne de la cuve 11. Avantageusement, comme on peut le voir sur la figure 3, un premier filtre 16.1 assure une filtration grossière laissant passer les particules de dimension inférieure à une fraction de millimètre sur un principe de filtre écran. Par exemple, ce premier filtre 16.1 est constitué d'un panier moulé filtrant comportant des orifices formés entre des nervures de matière plastique injectée. En outre, un deuxième filtre 16.2 assurant une filtration fine présente une forme cylindrique creuse. Ce filtre cylindrique 16.2 est de préférence constitué d'une nappe d'un matériau non tissé plissé en accordéon. La nappe est maintenue entre deux flasques circulaires et entourée d'un matériau non tissé extérieur. En amont du premier filtre 16.1, on pourra prévoir un moyen de préfiltration comme par exemple une toile à orifices de 0.1 à 0.5mm, par exemple 0.3mm. La cuve 11 pourra être munie d'un dispositif de trop-plein 20. Alternativement, le filtre 16.2 pourra être réalisé dans un matériau tissé.

Un premier conduit 17 issu de la cuve 11 dans lequel circule un flux d'eau primaire est relié à une entrée d'une pompe 18, laquelle présente une sortie connectée à une entrée d'injection 19 d'un multiplicateur de débit 21. Un deuxième conduit 22 issu de la cuve 11 dans lequel circule un flux d'eau secondaire est relié à une entrée d'aspiration 24 du multiplicateur de débit 21. Le multiplicateur de débit 21, de préférence de type Venturi, comporte, de façon connue en soi, un tronçon convergent et un tronçon divergent pour accélérer le flux d'eau généré à sa sortie 25. On crée ainsi un courant de circulation d'eau à l'intérieur du bassin de piscine. La pompe 18 pourra comporter un moteur électrique à vitesse variable, multivitesse, afin de faire varier l'intensité du débit d'eau à l'intérieur du bassin, ou alternativement à vitesse fixe.

Le conduit récupérateur 13 et la sortie 25 du multiplicateur de débit débouchent dans une plaque 26 intégrée dans un muret 27 de la piscine.

En outre, comme on peut le voir sur les figures 2 et 3, le bloc de filtration 10 comporte un système 28 de mesure d'un niveau de colmatage du filtre et/ou de détection d'un état de colmatage du filtre 16.2.

Ce système 28 comprend un capteur 29 de mesure de débit ou de vitesse de fluide, un conduit d'aspiration 30.1 connecté au capteur 29 ayant un piquage d'aspiration 31.1 réalisé dans la paroi 14 de la cuve 11 en amont du filtre 16.2, et un conduit de sortie 30.2 connecté au capteur 29 ayant un piquage de sortie 31.2 réalisé dans la paroi 14 de la cuve 11. De préférence, le piquage d'aspiration 31.1 réalisé dans la paroi 14 de la cuve 11 est disposé en amont des filtres 16.1 et 16.2.

Le capteur 29 pourra prendre la forme d'un capteur à effet Hall associé à un aimant fixé sur un élément mobile disposé dans le flux d'eau. Sous l'effet de la rotation de l'élément mobile, la fréquence du signal électrique reçu par le capteur varie. Un dispositif de commande traite le signal pour en déduire le débit ou la vitesse de fluide passant par les conduits 30.1 et 30.2.

De préférence, comme on peut le voir sur la figure 3, le filtre 16.2 de forme cylindrique présente une extrémité haute 33 et une extrémité basse 34. Le piquage d'aspiration 31.1 est réalisé dans la paroi 14 de la cuve 11 en amont de l'extrémité haute 33 du filtre 16.2. Le piquage de sortie 31.2 est réalisé dans la paroi 14 de la cuve 11 entre l'extrémité haute 33 et l'extrémité basse 34 du filtre 16.2. Le piquage d'aspiration 31.1 et le piquage de sortie 31.2 sont ainsi réalisés entre une extrémité haute et une extrémité basse de la cuve 11, le piquage de sortie 31.2 étant disposé en aval du piquage d'aspiration 31.1. Alternativement, le piquage de sortie 31.2 peut être réalisé dans la paroi 14 en dessous de l'extrémité basse 34 du filtre 16.2.

Avantageusement, comme on peut le voir sur la figure 4, un piquage 31.1, 31.2 des conduits est réalisé au moyen d'un connecteur encliquetable 35 disposé à l'endroit où doit être effectuée la mesure de débit ou de vitesse de liquide. En variante, le piquage 31.1, 31.2 des conduits est effectué par collage, soudage, ou vissage, ou tout autre moyen adapté à l'application.

Par ailleurs, comme cela est illustré sur la figure 2, un module de contrôle 37 permet de déterminer un niveau de colmatage et/ou un état de colmatage du filtre en fonction du débit d'eau mesuré par le capteur 29.

La détermination du niveau de colmatage pourra être effectuée via l'exploitation d'une cartographie C établissant la correspondance entre un niveau de colmatage, exprimé par exemple en pourcents, et un débit d'eau mesuré par le capteur 29.

En variante ou en complément, le module de contrôle 37 détermine un état "non colmaté" ou "colmaté" par comparaison du débit mesuré par le capteur 29 avec un seuil de colmatage. Ainsi, on considère que le filtre 16.2 est à l'état "non colmaté" lorsque le débit mesuré par le capteur 29 est inférieur au seuil et à l'état "colmaté" nécessitant un changement du filtre lorsque le débit mesuré par le capteur 29 devient supérieur au seuil. En effet, lorsque le filtre 16.2 est colmaté, le débit d'eau passant par le capteur 29 augmente. Bien entendu, des niveaux de colmatage intermédiaires pourront être détectés à l'aide de seuils intermédiaires.

Le module de contrôle 37 pourra comporter des moyens de communication 40 du niveau de colmatage et/ou de l'état de colmatage du filtre à un dispositif de surveillance et/ou un dispositif portable. Les moyens de communication 40 pourront être de type sans fil ou filaire.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Bloc de filtration (10) pour piscine comportant:
- une pompe (18),
- une cuve (11) comportant une paroi (14) délimitant un espace interne,
- au moins un filtre (16.1, 16.2) présentant une forme cylindrique creuse disposé à l'intérieur de l'espace interne de la cuve (11),
- un système (28) de mesure d'un niveau de colmatage et/ou de détection d'un état de colmatage dudit filtre (16.1, 16.2) comprenant:
- un capteur (29) de mesure de débit ou de vitesse de fluide,
- un conduit d'aspiration (30.1) connecté au capteur (29) ayant un piquage d'aspiration (31.1) et un conduit de sortie (30.2) connecté au capteur (29) ayant un piquage de sortie (31.2),
**caractérisé en ce que** le piquage d'aspiration (31.1) est réalisé dans la paroi (14) de la cuve (11) en amont du filtre (16.2) et le piquage de sortie (31.2) est réalisé dans la paroi (14) de la cuve (11),
- le filtre (16.2) ayant une extrémité haute (33) et une extrémité basse (34), le piquage d'aspiration (31.1) est réalisé dans la paroi (14) de la cuve (11) en amont de l'extrémité haute (33) du filtre (16.2),
- le piquage de sortie (31.2) étant réalisé dans la paroi (14) de la cuve (11) entre l'extrémité haute (33) et l'extrémité basse (34) du filtre (16.2).

2. Bloc de filtration selon la revendication 1, **caractérisé en ce qu'**il comporte un module de contrôle (37) permettant de déterminer un niveau de colmatage et/ou un état de colmatage du filtre en fonction du débit d'eau mesuré par le capteur (29).

3. Bloc de filtration selon la revendication 2, **caractérisé en ce que** le module de contrôle (37) est apte à déterminer le niveau de colmatage via l'exploitation d'une cartographie (C) établissant une correspondance entre un niveau de colmatage, exprimé par exemple en pourcents, et un débit mesuré par le capteur (29).

4. Bloc de filtration selon la revendication 2 ou 3, **caractérisé en ce que** le module de contrôle (37) est apte à déterminer un état "non colmaté" ou "colmaté" par comparaison du débit mesuré par le capteur (29) avec un seuil.

5. Bloc de filtration selon l'une quelconque des revendications 2 à 4, **caractérisé en ce que** le module de contrôle (37) comporte des moyens de communication (40) du niveau de colmatage et/ou de l'état de colmatage du filtre (16.1, 16.2) à un dispositif de surveillance et/ou un dispositif portable d'un utilisateur.

6. Bloc de filtration selon la revendication 1, **caractérisé en ce que** le filtre (16.2) est de préférence constitué d'une nappe d'un matériau non tissé plissé en accordéon.

7. Bloc de filtration selon l'une quelconque des revendications 1 à 6, **caractérisé en ce que** la pompe (18) comporte un moteur électrique à vitesse variable, multivitesse, ou vitesse fixe.

## Patentansprüche

1. Filterblock (10) für ein Schwimmbecken, mit:
- einer Pumpe (18),
- einem Tank (11) mit einer einen Innenraum abgrenzenden Wand (14),
- mindestens einem Filter (16.1, 16.2) mit hohler zylindrischer Form im Inneren des Tanks (11),
- einem System (28) zur Messung des Verstopfungsgrades und/oder zur Erkennung eines Verstopfungszustandes des Filters (16.1, 16.2), mit:
- einem Sensor (29) zur Messung der Durchflussrate oder Geschwindigkeit eines Fluides,
- einem Saugkanal (30.1), der mit dem Sensor (29) verbunden ist und einen Sauganschluss (31.1) aufweist, und einem Auslasskanal (30.2), der mit dem Sensor (29) verbunden ist und einen Auslassanschluss (31.2) aufweist,
**dadurch gekennzeichnet, dass** der Sauganschluss (31.1) in der Wand (14) des Tanks (11) stromaufwärts des Filters (16.2) und der Auslassanschluss (31.2) in der Wand (14) des Tanks (11) ausgebildet sind.
- wobei der Filter (16.2) ein oberes Ende (33) und ein unteres Ende (34) aufweist, der Sauganschluss (31.1) in der Wand (14) des Tanks (11) stromaufwärts des oberen Endes (33) des Filters (16.2) angebracht ist,
- wobei der Auslassanschluss (31.2) in der Wand (14) des Tanks (11) zwischen dem oberen Ende (33) und dem unteren Ende (34) des Filters (16.2) durchgeführt ist.

2. Filterblock nach Anspruch 1, **dadurch gekennzeichnet, dass** er ein Steuermodul (37) umfasst, das die Bestimmung des Verstopfungsgrades und/oder des Verstopfungszustandes des Filters in Abhängigkeit von der mit dem Sensor (29) gemessenen Wasserdurchflussrate ermöglicht.

3. Filterblock nach Anspruch 2, **dadurch gekennzeichnet, dass** das Steuermodul (37) in der Lage ist, den Verstopfungsgrad mittels einer Abbildung (C), die eine Korrespondenz zwischen einem beispielsweise in Prozent ausgedrückten Verstopfungsgrad und einer vom Sensor (29) gemessenen Durchflussrate herstellt, zu bestimmen.

4. Filterblock nach Anspruch 2 oder 3, **dadurch gekennzeichnet, dass** das Steuermodul (37) in der Lage ist, einen "nicht-verstopften" oder "verstopften" Zustand durch Vergleich der vom Sensor (29) gemessenen Durchflussrate mit einem Schwellenwert zu ermitteln.

5. Filterblock nach einem der Ansprüche 2 bis 4, **dadurch gekennzeichnet, dass** das Steuermodul (37) Mittel (40) zur Übermittlung des Verstopfungsgrades und/oder des Verstopfungszustands des Filters (16.1, 16.2) an ein Überwachungsgerät und/oder tragbares Gerät eines Benutzers umfasst.

6. Filterblock nach Anspruch 1, **dadurch gekennzeichnet, dass** der Filter (16.2) vorzugsweise aus einem Blatt aus zickzack gefaltetem Vliesstoff besteht.

7. Filterblock nach einem der Ansprüche 1 bis 6, **dadurch gekennzeichnet, dass** die Pumpe (18) einen Elektromotor mit veränderlicher, mehrfacher oder fester Drehzahl umfasst.

## Claims

1. A filtration block (10) for a swimming pool, comprising:
- a pump (18),
- a tank (11) comprising a wall (14) delimiting an internal space,
- at least one filter (16.1, 16.2) having a hollow cylindrical shape inside the internal space of the tank (11),
- a system (28) for measuring a clogging level and/or detecting a clogging state for said filter (16.1, 16.2) comprising:
- a sensor (29) for measuring a fluid flow rate or velocity,
- a suction duct (30.1) connected to the sensor (29) having a suction port (31.1) and an outlet duct (30.2) connected to the sensor (29) having an outlet port (31.2),
**characterized in that** the suction port (31.1) is made in the wall (14) of the tank (11) upstream of the filter (16.2) and the outlet port (31.2) is made in the wall (14) of the tank (11),
- the filter (16.2) having an upper end (33) and a lower end (34), the suction port (31.1) is made in the wall (14) of the tank (11) upstream of the upper end (33) of the filter (16.2),
- the outlet port (31.2) being made in the wall (14) of the tank (11) between the upper end (33) and the lower end (34) of the filter (16.2).

2. The filtration block according to claim 1, **characterized in that** it comprises a control module (37) enabling the determination of a clogging level and/or a clogging state for the filter as a function of the water flow rate measured by the sensor (29).

3. The filtration block according to claim 2, **characterized in that** the control module (37) is capable of determining the clogging level via the use of a mapping (C) establishing a correspondence between a clogging level, expressed for example in percent, and a flow rate measured by the sensor (29).

4. The filtration block according to claim 2 or 3, **characterized in that** the control module (37) is capable of determining a "unclogged" or "clogged" state by comparing the flow rate measured by the sensor (29) with a threshold.

5. The filtration block according to any one of the claims 2 to 4, **characterized in that** the control module (37) includes means for communicating (40) the clogging level and/or clogging state for the filter (16.1, 16.2) to a user's monitoring device and/or portable device.

6. The filtration block according to claim 1, **characterized in that** the filter (16.2) is preferably made of a sheet of accordion-pleated non-woven material.

7. The filtration block according to any one of the claims 1 to 6, **characterized in that** the pump (18) comprises a variable speed, multispeed, or fixed speed electric motor.
